# DEMANDE DE BREVET EUROPEEN

(11) **EP 1 331 713 A1**
(43) Date de publication de la demande: **30.07.2003**
(21) Numéro de dépôt: 03290186.0
(22) Date de dépôt: 23.01.2003
(51) Int. Cl.: H02G 1/08

(54) **Outil d'engainage d'au moins un câble dans une gaine fendue longitudinalement, et dispositif d'engainage comportant un tel outil**

(30) Priorité: 28.01.2002 FR 0200988
(71) Demandeur: FRANCE TELECOM, 75015 Paris (FR)
(72) Inventeur: Robersy, Gabriel, 97490 La Bretagne (La Réunion) (FR)
(74) Mandataire: Jacobson, Claude

(57) **Abrégé**

L'outil d'engainage (1) comporte un organe (40) d'écartement des bords de la fente longitudinale (8) de la gaine (4), et des moyens pour introduire, suivant un sens (S) de progression de l'engainage, les câbles (2) depuis l'extérieur vers l'intérieur de la gaine (4) par une zone de fente écartée (8A).

Ces moyens d'introduction comportent une boucle rigide (28), disposée en arrière, suivant le sens d'engainage (S), de l'organe d'écartement (40), adaptés pour délimiter, à l'aplomb de la zone de fente écartée (8A), un contour fermé de maintien de la partie des câbles à introduire. De plus, l'outil (1) comporte des moyens pour guider, à l'intérieur de la gaine (4) la partie des câbles introduite dans la gaine par la zone de fente écartée (8A).

Application à l'engainage de jarretières en fibres optiques dans une gaine annelée.

## Description

La présente invention concerne un outil d'engainage d'au moins un câble dans une gaine fendue longitudinalement, du type défini dans le préambule de la revendication 1.

Elle concerne également un dispositif d'engainage comportant un tel outil.

Pour protéger des câbles souples, tels que des jarretières en fibres optiques utilisées pour la transmission de données, il est courant de placer ces câbles à l'intérieur d'une gaine cylindrique en plastique assez souple et résistant aux chocs, de diamètre supérieur à celui de l'ensemble des câbles à protéger. Une telle gaine peut être installée alors que les câbles sont déjà connectés à leurs extrémités et/ou sont situés, au moins en partie, dans des zones peu accessibles, telles que des faux-planchers, des faux-plafonds, des armoires électriques, etc.

On utilise à cet effet une paire de ciseaux ou analogue pour ouvrir progressivement la gaine sur toute sa longueur, tout en introduisant à la main, le ou les câbles à protéger. Cette méthode fait courir le risque de blessures corporelles (coupures, pincements) pour l'opérateur qui introduit manuellement le câble dans la gaine, et le risque d'endommager les câbles par les lames des ciseaux ou par la gaine dont la fente a tendance à se refermer en pinçant un ou plusieurs câbles. Ce dernier inconvénient est d'autant plus marqué dans le cas de jarretières en fibres optiques qui sont très fragiles et dont les performances ultérieures en transmission dépendent du bon état des fibres.

Lorsqu'on dispose de gaines préalablement fendues sur toute leur longueur, il est connu d'utiliser un outil du type précité qui comporte un doigt d'écartement des bords de la fente longitudinale de la gaine, et un corps de positionnement de la gaine ouverte autour d'une partie de câble à engainer. Par déplacement relatif de la gaine par rapport à l'outil, la gaine se referme sur la partie de câble précitée. Ce genre d'outil s'emploie cependant uniquement pour l'engainage d'un câble unique assez rigide, l'outil étant en effet en partie guidé par le câble, voire en appui coulissant sur celui-ci. De plus, les risques de pincement du câble sont très importants, si bien que cet outil est limité à l'engainage d'un câble de diamètre extérieur sensiblement égal ou légèrement inférieur au diamètre intérieur de la gaine. Il ne permet donc pas d'engainer de façon sûre, fiable et rapide plusieurs fibres optiques souples et fragiles dans une gaine de grand diamètre.

Le but de l'invention est de proposer un outil du type précité, qui permette d'insérer facilement des câbles souples dans une gaine de protection fendue longitudinalement, et ce sur plusieurs dizaines de mètres, et qui puisse permettre également l'extraction de câbles engainés lors de réparations.

A cet effet, l'invention a pour objet un outil d'engainage du type précité, qui présente les caractéristiques de la partie caractérisante de la revendication 1.

D'autres caractéristiques de cet outil, prises isolément ou suivant toutes les combinaisons techniquement possibles, sont définies dans les revendications 2 à 14.

L'invention a également pour objet un dispositif d'engainage d'au moins un câble dans une gaine fendue longitudinalement, défini dans la revendication 15.

D'autres caractéristiques de ce dispositif sont définies dans les revendications 16 et 17.

L'invention sera mieux comprise à la lecture de la description qui va suivre, donnée uniquement à titre d'exemple et faite en se référant aux dessins sur lesquels :
- la figure 1 est une vue en perspective d'un outil d'engainage selon l'invention et de deux câbles à engainer dans une gaine de protection ;
- la figure 2 est une vue de côté de l'outil de la figure 1, l'outil étant légèrement basculé vers le lecteur ;
- la figure 3 est une vue suivant la flèche III indiquée sur la figure 2 de l'outil de la figure 1 ;
- la figure 4 est une vue en perspective d'un outil de retenue de câbles par rapport à une gaine, appartenant à un dispositif d'engainage selon l'invention ; et
- les figures 5A, 5B et 5C sont des vues en perspective illustrant l'engainage progressif des deux câbles de la figure 1 par le dispositif selon l'invention.

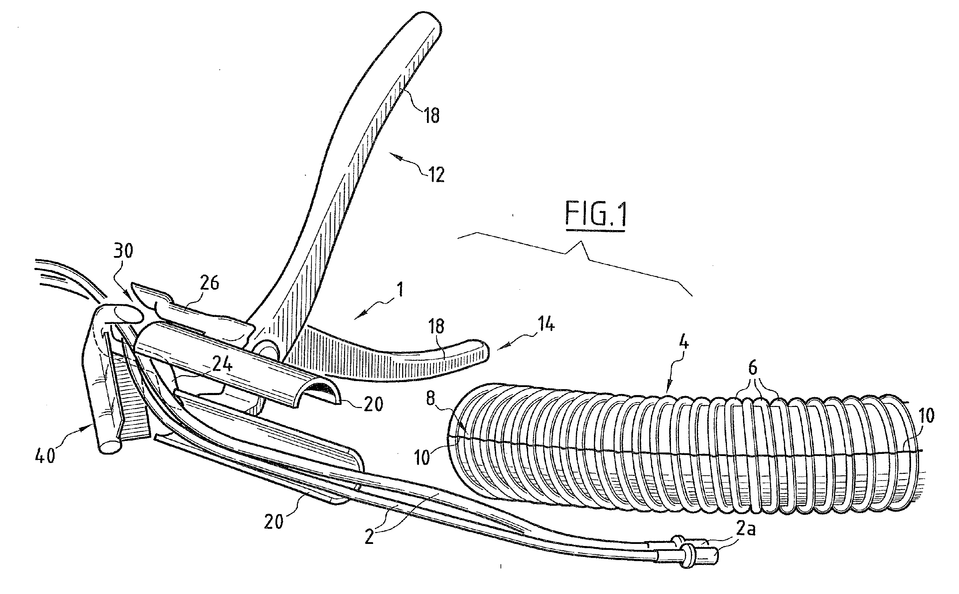

Sur les figures 1 à 3 est représenté un outil 1 d'engainage de câbles 2 dans une gaine de protection 4. Pour l'exemple considéré, deux câbles sont représentés, mais il est entendu que plus de deux câbles, tout comme un seul câble, peuvent être engainés par l'outil 1 comme il va être expliqué ci-dessous.

Les deux câbles 2 de la figure 1 sont des jarretières en fibres optiques, destinées par exemple à relier les bornes d'un répartiteur téléphonique, et comportent à cet effet, à leurs extrémités respectives, des plots de connexion 2A.

La gaine 4 est une gaine en matériau plastique, plus rigide que les câbles 2 et de diamètre intérieur supérieur à l'épaisseur des deux câbles. Elle se présente sous la forme d'un cylindre annelé, c'est-à-dire possédant une surface extérieure présentant un profil en creux et en bosses qui délimite une succession de bourrelets 6 en forme d'anneau. Une fente 8 est ménagée sur toute la longueur de la gaine 4 de façon à pouvoir accéder, en n'importe quel endroit suivant sa longueur, à l'intérieur de la gaine, en écartant les bords 10 de la fente 8.

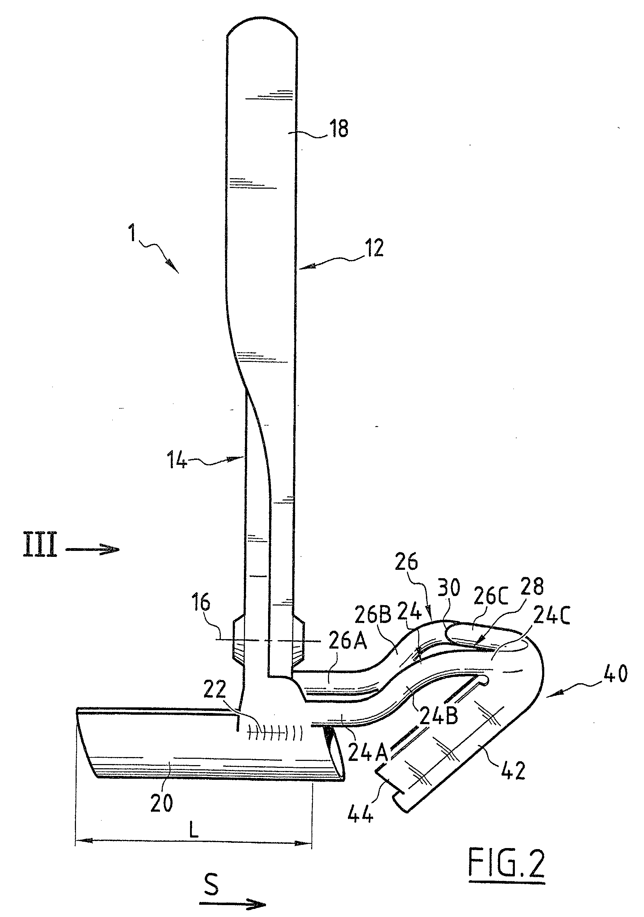

L'outil 1 est adapté pour engainer progressivement, suivant un sens d'engainage S indiqué sur la figure 2, les câbles 2 de l'extérieur à l'intérieur de la gaine 4.

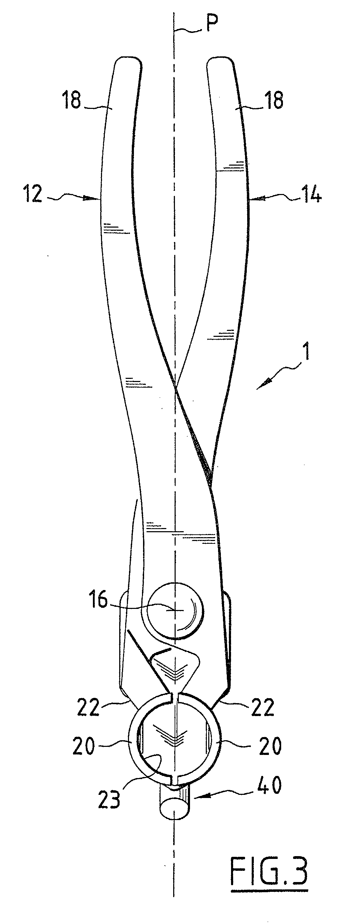

L'outil d'engainage 1 comporte à cet effet deux branches 12 et 14 articulées l'une par rapport à l'autre, ces branches étant reliées par un axe d'articulation 16. Une extrémité de chaque branche 12, 14 forme des poignées 18 d'actionnement des branches de façon à les rapprocher ou à les écarter l'une de l'autre par pivotement d'une branche par rapport à l'autre autour de l'axe 16, les branches demeurant sensiblement symétriques par rapport à un plan médian P (voir figure 3) contenant l'axe de pivot.

Dans la partie de chaque branche opposée, par rapport à l'axe d'articulation 16, à celle portant la poignée 18, chaque branche 12, 14 comporte une mâchoire 20 en forme de gouttière, disposée suivant une direction sensiblement parallèle à l'axe d'articulation 16. Chacune des mâchoires 20 est solidaire de la branche correspondante 12, 14, par exemple par une soudure 22, et s'étend en arrière, par rapport au sens d'engainage S, depuis la branche sur une longueur notée L sur la figure 2.

Les deux mâchoires 20 sont adaptées pour se rapprocher et s'écarter l'une de l'autre lorsque les branches 12 et 14 sont manoeuvrées autour de l'axe 16, à la façon de mâchoires d'une pince traditionnelle : dans la configuration de la figure 1 où les poignées 28 sont écartées l'une de l'autre, les mâchoires 20 sont distantes l'une de l'autre, tandis que dans la configuration de la figure 3 où les poignées 28 sont rapprochées au plus près l'une de l'autre, les mâchoires se referment l'une sur l'autre de part et d'autre du plan de fermeture P, de façon à former un espace cylindrique 23 ouvert à ses deux extrémités. Ce cylindre 23, de longueur L, est de diamètre inférieur à celui de la gaine 4, mais supérieur à l'encombrement transversal des câbles 2. Il est ainsi à même de guider les câbles à l'intérieur de la gaine sur la longueur L, le rapport L/D de la longueur du cylindre sur le diamètre de la gaine étant avantageusement supérieur à 3 comme il sera expliqué plus loin.

Comme représenté à la figure 2, entre l'axe d'articulation 16 et les mâchoires 20, chaque branche 12,14 comporte un bras coudé 24, 26 qui s'étend essentiellement suivant une direction sensiblement perpendiculaire à la direction de la branche associée. Chaque bras 24, 26, réalisé d'un seul tenant, comporte, en s'éloignant de la branche correspondante 12, 14, une première partie 24A, 26A sensiblement parallèle à l'axe 16 et par exemple soudée à la branche, une seconde partie 24B, 26B inclinée vers la branche (c'est-à-dire vers le haut sur la figure 2) par rapport à la première, et une troisième partie 24C, 26C sensiblement parallèle à la première partie. Les extrémités libres des troisièmes parties 24C et 26C sont solidaires l'une de l'autre, par exemple par soudure, de façon à former une boucle 28 destinée à maintenir les câbles dans une zone donnée d'introduction dans la gaine 4 qui sera détaillée plus loin.

Afin d'autoriser les mouvements d'ouverture et de fermeture des branches de l'outil 1, un des deux bras est transversalement fendu de part en part. Sur l'exemple représenté, le bras 26 est pourvu d'une fente 30, représentée avec une largeur exagérée sur la figure 2, réalisée dans la troisième partie 26C du bras. La fente 30 est ainsi à même de s'ouvrir et de se fermer de manière sensiblement jointive lorsque les poignées 28 sont manoeuvrées autour de l'axe d'articulation 16 : dans la configuration de la figure 2 où les poignées 28 sont rapprochées au plus près l'une de l'autre, la fente 30 est fermée de façon à ce que la boucle 28 délimite un contour fermé, tandis que dans la configuration de la figure 1 où les poignées 28 sont écartées l'une de l'autre, la fente 30 est ouverte pour permettre l'introduction des câbles 2 de l'extérieur à l'intérieur de la boucle 28. La fente 30 est en conséquence conçue pour s'ouvrir d'au moins le diamètre d'un câble 2, les dimensions de la boucle 28 n'ayant pas par exemple besoin d'être choisies en fonction de l'encombrement des plots de connexion 2A des câbles.

L'outil 1 comporte en outre un organe 40 d'écartement des bords 10 de la fente longitudinale 8 de la gaine 4, sous la forme d'une lame d'écartement solidaire de la partie d'extrémité 24C du bras 24.

Cette lame est réalisée en un matériau rigide par rapport à celui de la gaine. Elle est située en avant, suivant le sens d'engainage S, des branches 12, 14 et, dans l'exemple représenté, est disposée sensiblement dans le plan P de fermeture des mâchoires 20 lorsque les branches sont en configuration rapprochée (figure 3).

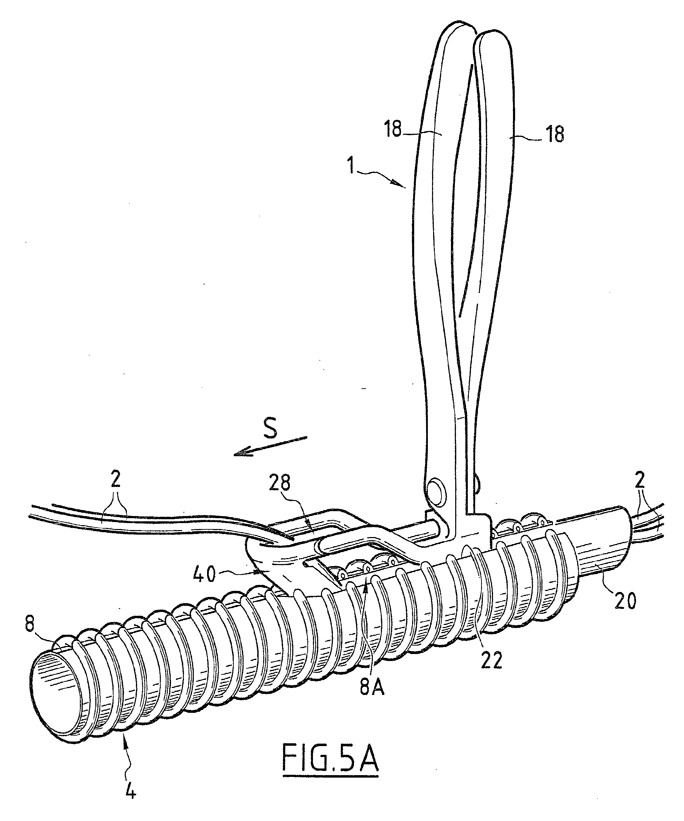

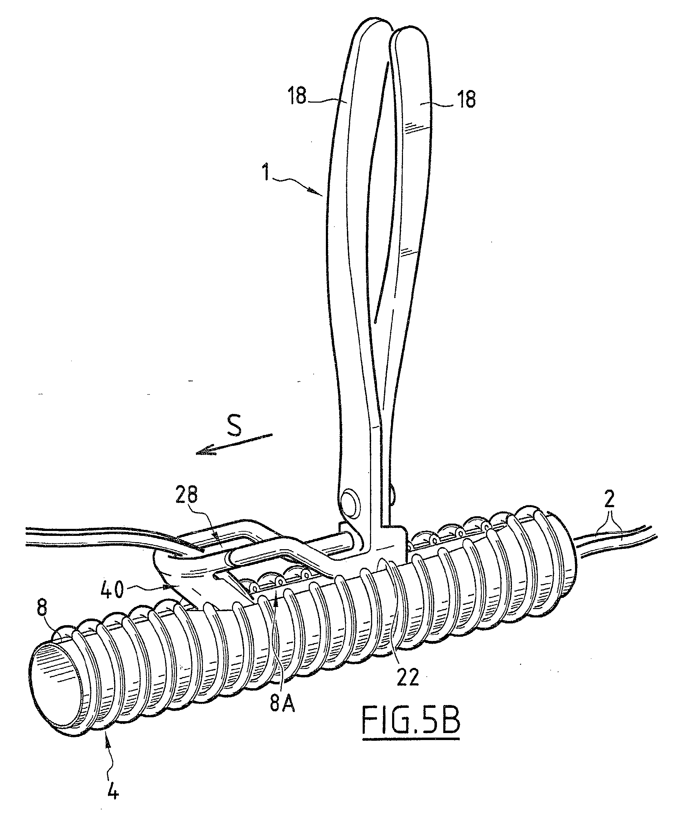

La coupe transversale de la lame 40 a la forme générale d'un V à angle de base arrondie : la pointe arrondie 42 du V, qui limite les risques de coupure, est destinée à être tournée vers la gaine pour s'y introduire facilement, et les flancs 44 du V sont destinés à écarter les bords 10 de la fente 8. Dans le sillage de la lame 40, les bords de la fente peuvent prendre appui longitudinalement sur les zones de soudure 22, et la fente 8 demeure ainsi ouverte dans une zone de fente écartée (notée 8A sur la figure 5A), la boucle 28 de maintien de la partie des câbles à introduire étant située sensiblement à l'aplomb de cette zone de fente écartée lors de l'engainage des câbles.

Pour faciliter la pénétration et la progression de la lame 40 dans la fente 8, cette lame s'étend, sur sa longueur suivant une direction inclinée par rapport à la direction longitudinale de la gaine. Dans l'exemple représenté, elle s'étend de façon sensiblement parallèle à la deuxième partie 24B du bras 24.

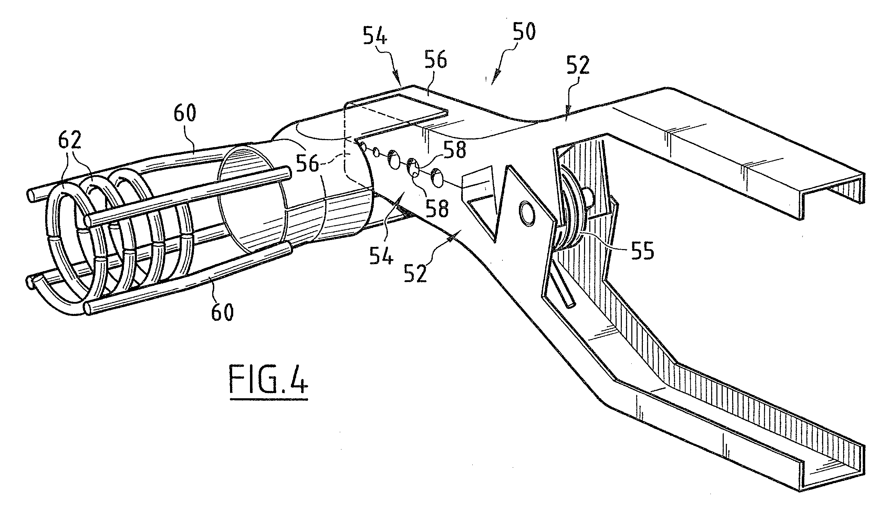

Sur la figure 4 est représenté un outil 50 de retenue de câbles par rapport à l'extrémité de la gaine dans laquelle ils sont insérés, cet outil étant destiné à être utilisé avec les câbles 2 et la gaine 4 de la figure 1. Il se présente sous la forme d'une pince à deux branches 52 dont les mâchoires 54 sont maintenues fermées l'une sur l'autre par un ressort spiralé 55. Chaque mâchoire 54 comporte une tête 56 disposée dans le prolongement de la branche correspondante 52. Les faces de chaque tête 56 en regard l'une de l'autre portent des rainures 58 s'étendant sensiblement perpendiculairement à la branche associée.

Chaque paire de rainures 58 symétriques par rapport au plan de fermeture de la pince 50 est destinée à recevoir un câble 2 pour le maintenir fixe par rapport à l'outil 50. Ce dernier comporte donc une pluralité de paires de rainures 58 adaptées pour chaque diamètre de câble envisageable, de façon à éviter une pression radiale trop importante sur la fibre optique des câbles. En variante, cet outil 50 peut comporter des moyens de réglage des dimensions transversales des rainures de façon à ce qu'elles s'adaptent au plus près aux diamètres des câbles à retenir sans pression excessive.

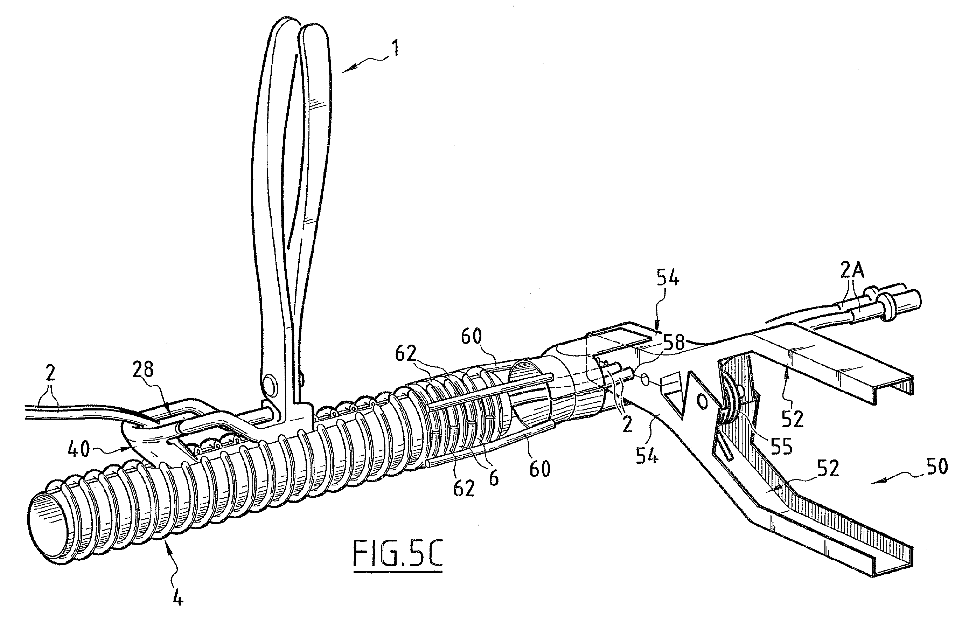

De plus, chaque mâchoire 54 comporte un mors 60 constitué d'une armature de forme générale demi-cylindrique, et s'étendant perpendiculairement à la branche correspondante 52. Chacune des armatures comporte à son extrémité libre des fils métalliques 62 en arc de cercle, adaptés pour se positionner sur la gaine en se logeant dans les parties creuses de la surface extérieure de celle-ci (voir figure 5C), c'est-à-dire entre les bourrelets annulaires 6.

L'outil d'engainage 1 des figures 1 à 3 et l'outil 50 de retenue de câbles de la figure 4 forment un dispositif d'engainage selon l'invention.

Le fonctionnement de ce dispositif est le suivant.

On met en place à l'endroit voulu, par exemple dans un faux-plafond ou dans une cloison, la gaine fendue 4, en la positionnant sensiblement parallèlement et à proximité des câbles 2 à protéger par engainage.

On ouvre l'outil 1 en écartant les poignées 18 l'une de l'autre par pivotement autour de 16. Comme représenté sur la figure 1, on introduit dans l'outil n'importe quelle partie des câbles suivant leur longueur : on introduit ainsi les câbles 2 d'une part entre les bras 24, 26, en faisant passer les câbles par la fente 30 ouverte, et d'autre part entre les mâchoires 20 ouvertes.

On ferme ensuite les poignées 28 de façon à ce que les câbles soient retenus d'une part par la boucle fermée 28 de la paire de bras 24, 26, et d'autre part par la paire de mâchoires 20, délimitant alors le cylindre de guidage 23.

Comme représenté sur la figure 5A, on introduit ensuite l'outil 1 dans la gaine 4, par exemple par son extrémité, en écartant les bords 10 de la fente 8 au moyen de la lame 40. En déplaçant l'outil 1 suivant la longueur de la gaine comme indiqué par la flèche S sur les figures 5A et 5B, les bords de la fente de la gaine sont écartés l'un de l'autre et prennent ensuite appui sur les zones de soudure 22. Une zone de fente écartée, notée 8A sur les figures 5A et 5B, est ainsi formée par laquelle les câbles 2 sont introduits dans la gaine, sensiblement à l'aplomb du contour fermé délimité par la boucle 28.

La partie des câbles introduite dans la gaine 4 est guidée à l'intérieur de la gaine par le cylindre 23, tandis que la fente 8 se referme progressivement autour des mâchoires 20. Avec le rapport L/D précédemment indiqué, ces mâchoires empêchent les câbles de ressortir de la gaine après le passage de l'outil 1, la fente de la gaine à l'aplomb de l'extrémité arrière, dans le sens de progression de l'outil S, des mâchoires étant sensiblement refermée.

Lorsque les plots d'extrémité des câbles 2 ne sont pas encore raccordés, par exemple aux bornes d'un répartiteur, et/ou lorsque la longueur des câbles 2 déjà engainée devient importante, on utilise l'outil de retenue 50 pour fixer la position des câbles, sans pression excessive sur ces derniers, par rapport à l'extrémité entrante de la gaine. Pour cela, on rapproche les poignées des branches 52 de l'outil 50, ce qui permet l'écartement des mâchoires 54. Les câbles 2 sont alors insérés dans les rainures de maintien 58, en adaptant si nécessaire le diamètre de ces rainures au diamètre des câbles, et, de façon concomitante, les armatures métalliques 60 sont positionnées sur l'extrémité entrante de la gaine 4. En relâchant les poignées des branches 52, le ressort spiralé 55 referme l'une sur l'autre les mâchoires 54, à la fois en serrant fermement l'extrémité entrante de la gaine par coopération des fils 62 et des anneaux 6 de la gaine et en retenant sans pression excessive les câbles 2 par rapport à cette gaine, comme représenté sur la figure 5C.

Le dispositif selon l'invention permet aussi d'engainer rapidement et avec fiabilité un ou plusieurs câbles souples, et/ou fragiles, à l'intérieur d'une gaine rigide de protection. De grandes longueurs de câbles (plusieurs dizaines de mètres) peuvent ainsi être engainées, sans courir le risque d'endommager les câbles par pincement dans la fente de la gaine, notamment dans la zone où cette dernière se referme après le passage de l'outil.

L'outil d'engainage selon l'invention présente également l'avantage de pouvoir être utilisé alors que les deux extrémités du ou des câbles à engainer sont déjà fixées puisque l'introduction du ou des câbles dans l'outil s'effectue par passage du câble dans la fente 30 ouverte et entre les mâchoires 20.

Il est par ailleurs possible d'utiliser l'outil d'engainage 1 pour extraire totalement ou en partie un ou plusieurs câbles préalablement engainés. Une telle extraction peut être nécessaire lors d'opérations de maintenance, de réparation ou de remplacement d'un ou de plusieurs câbles préalablement installés. Il convient alors par exemple d'ouvrir la gaine en écartant les bords de sa fente, de sortir un ou plusieurs câbles, et d'introduire ce ou ces câbles dans l'outil, c'est-à-dire dans la boucle 28 et le cylindre de guidage 22. Par déplacement de l'outil le long de la gaine dans le sens contraire du sens d'engainage S, le ou les câbles sont extraits de la gaine en empruntant la zone de fente écartée 8A et il est possible de localiser le défaut à réparer.

Diverses variantes de réalisation de l'outil sont envisageables sans sortir du cadre de l'invention : le dimensionnement de l'outil peut être adapté au diamètre de la gaine utilisée et/ou au diamètre des câbles à protéger ; la section de l'espace 23 de guidage des câbles à l'intérieur de la gaine n'est pas nécessairement circulaire, mais peut être adaptée à la forme de la gaine ; les poignées de manoeuvre de l'outil d'engainage peuvent être de formes différentes et mieux adaptées à un environnement particulier d'utilisation tel qu'une armoire électrique ; le profil de l'organe d'écartement des bords de la fente de la gaine peut être courbe ; etc.

## Revendications

1. Outil d'engainage d'au moins un câble dans une gaine fendue longitudinalement, du type comportant un organe (40) d'écartement des bords (10) de la fente longitudinale (8) de la gaine (4), et des moyens pour introduire, suivant un sens (S) de progression de l'engainage, le ou les câbles (2) depuis l'extérieur vers l'intérieur de la gaine (4) par une zone (8A) de la fente écartée par ledit organe d'écartement, **caractérisé en ce que** les moyens d'introduction comportent une boucle rigide (28), disposée en arrière, dans le sens d'engainage (S), de l'organe d'écartement (40), et adaptée pour délimiter, à l'aplomb de la zone de fente écartée (8A), un contour fermé de maintien de la partie du ou des câbles à introduire, et **en ce qu'**il comporte des moyens (20) de guidage, à l'intérieur de la gaine (4), de la partie du ou des câbles introduite dans la gaine par la zone de fente écartée (8A).

2. Outil suivant la revendication 1, **caractérisé en ce qu'**il comporte deux branches (12, 14) articulées l'une par rapport à l'autre autour d'un axe (16) entre une position d'ouverture et une position de fermeture, chaque branche portant, d'un côté dudit axe, une poignée (18) de manoeuvre de la branche, et, de l'autre côté dudit axe, les moyens de guidage (20).

3. Outil suivant la revendication 2, **caractérisé en ce que** les moyens de guidage comportent une paire de mâchoires (20) adaptée pour guider à l'intérieur de la gaine (4) la partie du ou des câbles introduite dans la gaine par la zone de fente écartée (8A), les mâchoires (20) étant positionnées de manière jointive de part et d'autre d'un plan de fermeture (P) lorsque les branches (12, 14) sont en position de fermeture, et distantes l'une de l'autre lorsque les branches sont en position d'ouverture.

4. Outil suivant la revendication 3, **caractérisé en ce que** les mâchoires (20) s'étendent dans une direction sensiblement parallèle à l'axe d'articulation (16).

5. Outil suivant l'une des revendications 3 ou 4, **caractérisé en ce que** les mâchoires (20) s'étendent en arrière, par rapport au sens d'engainage (S), depuis les branches (12, 14), sur une longueur prédéterminée L de façon que, en cours d'engainage, la partie de fente longitudinale (8) située à l'aplomb de l'extrémité arrière des mâchoires (20) est sensiblement fermée.

6. Outil suivant la revendication 5, **caractérisé en ce que** le rapport entre ladite longueur prédéterminée (L) et le diamètre intérieur de la gaine est supérieur à 3.

7. Outil suivant l'une quelconque des revendications 3 à 6, **caractérisé en ce que**, lorsque les branches (12, 14) sont en position de fermeture, les mâchoires (20) délimitent entre elles un espace (23) de forme tubulaire ouverte à ses deux extrémités et adapté pour guider le ou les câbles (2) à l'intérieur de la gaine (4).

8. Outil suivant la revendication 7, **caractérisé en ce que** ledit espace de guidage (23) est de forme cylindrique.

9. Outil suivant l'une quelconque des revendications 2 à 8, **caractérisé en ce que** chaque branche (12, 14) comporte un bras (24, 26) solidaire de la branche correspondante et formant, au moins en partie, la boucle rigide (28), et **en ce qu'**une fente (30) est ménagée dans l'un desdits bras (24, 26) de façon que ladite fente est ouverte lorsque les branches (12, 14) sont en position d'ouverture et est fermée lorsque les branches (12, 14) sont en position de fermeture.

10. Outil suivant la revendication 9, **caractérisé en ce que**, lorsque les branches (12, 14) sont en position d'ouverture, la fente (30) du bras fendu (26) est ouverte d'une distance sensiblement égale au diamètre nominal du ou des câbles à engainer.

11. Outil suivant l'une quelconque des revendications 2 à 10, **caractérisé en ce que** l'organe d'écartement est une lame (40) de section en forme de V à base arrondie, reliée à au moins une des branches (12, 14) et destinée à s'étendre longitudinalement suivant une direction inclinée par rapport à la direction longitudinale de la gaine (4).

12. Outil suivant les revendications 3 et 11, **caractérisé en ce que** la lame d'écartement (40) s'étend sensiblement dans le plan de fermeture (P).

13. Outil suivant l'une des revendications 9 ou 10 et l'une des revendications 11 ou 12, **caractérisé en ce que** la lame d'écartement (40) est solidaire de l'extrémité libre d'au moins un des bras (24, 26).

14. Outil suivant l'une quelconque des revendications précédentes, **caractérisé en ce que** les moyens d'introduction (28) permettent en outre d'extraire, suivant le sens contraire du sens d'engainage (S), le ou les câbles (2) de l'intérieur vers l'extérieur de la gaine (4) par la zone de fente écartée (8A).

15. Dispositif d'engainage d'au moins un câble dans une gaine fendue longitudinalement, **caractérisé en ce qu'**il comporte un outil d'engainage (1) suivant l'une quelconque des revendications 1 à 14, et un outil (50) de retenue du ou des câbles (2) par rapport à une extrémité de la gaine (4), lequel outil de retenue (50) est une pince à mâchoires maintenues fermées par un ressort (55), chaque mâchoire (54) portant un mors (60) de serrage de ladite extrémité de gaine.

16. Dispositif suivant la revendication 15, **caractérisé en ce que** chaque mors (60) comporte au moins un fil rigide (62) en arc de cercle, destiné à se positionner dans des parties creuses de la surface extérieure de la gaine (4).

17. Dispositif suivant l'une des revendications 15 ou 16, **caractérisé en ce qu'**une ou chaque mâchoire (54) comporte au moins une rainure (58) de retenue du ou des câbles (2).
